# EUROPEAN PATENT SPECIFICATION

(11) **EP 0 433 333 B1**
(45) Date of publication and mention of the grant of the patent: **03.02.1993**
(21) Application number: 89909827.1
(22) Date of filing: 01.09.1989
(51) Int. Cl.: E03F 3/06, E21D 11/15, E04C 2/22

(54) **CONSTRUCTIONAL MEMBER AND METHOD**
BAUGLIED UND VERFAHREN
ELEMENT DE CONSTRUCTION ET PROCEDE

(30) Priority: 06.09.1988 GB 8820915
(43) Date of publication of application: 26.06.1991
(73) Proprietor: RUSWROE LIMITED, Stockport, Cheshire SK3 8AY (GB)
(72) Inventor: RUSSEL, Derek Vincent, West Gorton, Manchester 18 (GB)
(74) Representative: Lawrence, John Gordon
(86) International application number: GB8901022
(87) International publication number: WO9002851

(56) References cited:
- EP-A- 0 081 983
- EP-A- 0 164 332
- DE-A- 2 432 648
- US-A- 2 763 586
- US-A- 3 552 277

## Description

This invention concerns a constructional member and method primarily, though not exclusively, suitable for use in the lining or relining of a sewer.

Means and methods for relining sewers are known from British Patent No. 2113739, which teaches the use of planks formed from multiple layers of wire mesh. The planks are nailed to the internal walls of the sewer and redered with a cementitious material which is forced into and through the planks to fill the interstices thereof and the void between them and the sewer wall. In effect the sewer is lined with a shell of ferro-cement.

This operation is very labour intensive.

Furthermore, some sewers present special problems in that there is a high concentration of acid present which would attack the rendering and eventually penetrate to the reinforcing steel, thus destroying the lining.

It is amongst the objects of the present invention to provide a means and method for simplifying the relining operation and also for dealing with such problem sewers.

EP - A - 0 164 332 teaches a constructional member comprising a bendable plastics plate having steel reinforcement embedded therein and extending outwardly from one face thereof.

According to the present invention there is provided a constructional member formed from a bendable plate (10) of plastics material and an assembly (12) of steel wires extending outwardly from one face thereof, characterised in that the assembly (12) comprises a ferrocement reinforcement of crossed sets of spaced, parallel wires and woven wire mesh and in that a textile fabric (11) is bonded to one face of plastics material plate (10) and in that the assembly (12) is secured to the fabric by an adhesive applied to the fabric at discrete locations.

The plate may be of a thermoplastic polyolefin such as a high density polyethylene.

The textile fabric may be stitch-bonded polyester

The fabric may be thermally bonded to the plate.

The assembly of steel wires may be secured to the fabric by any suitable bonding agent such as polyester, epoxy or phenolic resin adhesives.

The adhesive may be applied at discrete locations such as at spaced parallel strips.

Wire from the assembly may be deformed from the face thereof for engagement with the adhesive to space the main body of the assembly away from the plate.

The layers may be held together by folding or the wire mesh may be trapped between the two sets of parallel wires.

The plastics plate takes the shape of the reinforcement assembly which may be bent to a desired form before or after being joined with the plate.

The contructional members may be employed to form a lining within a tubular duct such as a sewer in a method in which the members are arranged with the wire reinforcement against the wall of the duct in the fashion of tiles with sealing means between their adjacent edges, some of the members being cut to size if necessary to close the lining such that it forms a self-supporting rigid structure and behind which a cementitious material is pumped to fill the void between the plates and the watt of the duct.

The invention will be further apparent from the following description, with reference to the several Figures of the accompanying drawings, which show, by way of example only, one form of contructional member embodying same and its use in relining a sewer.

Of the drawings:-
Figure 1 shows a front elevation of the member;
Figure 2 shows a side view of the member;
Figure 3 shows a rear elevation of the member;
Figure 4 shows a cross-section through the member on the line IV-IV of Figure 1;
Figure 5 shows a cross-section through a sewer relind with the members of Figure 1;
Figure 6 shows a section on the line VI-VI of Figure 5; and
Figure 7 shows a cross-section on the line VII-VII of Figure 6 on an enlarged scale.

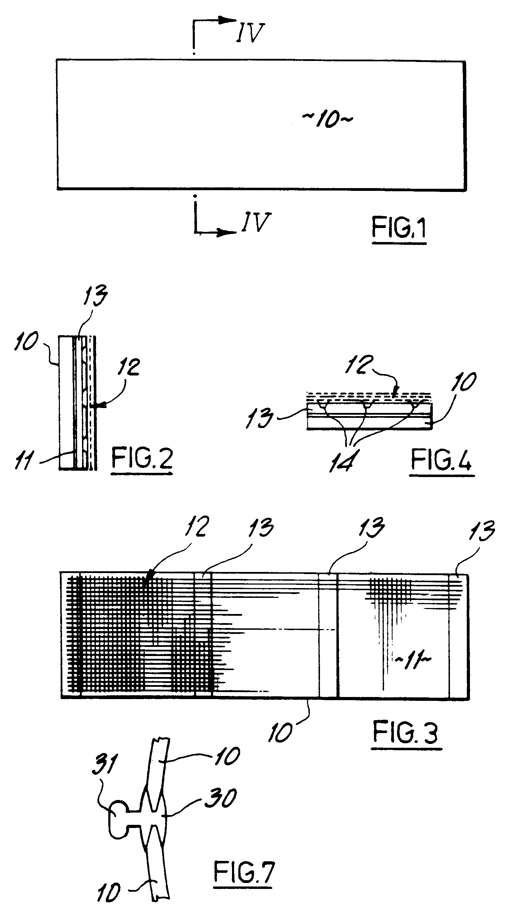

Referring firstly to Figures 1-4, it will be seen that the constructional member comprises a bendable plate 10 of plastics material typically having a thickness of 3 mm, a length of 3 m and a width of 50 cm. The plate 10 is of a high density polyethylene and is backed by a sheet 11 of stitch-bonded polyester which has been thermally bonded thereto.

An assembly 12 of steel wire reinforcement is bonded to the back of the plate 10 by spaced parallel strips 13 of an adhesive such as an epoxy resin adhesive.

The assembly 12 comprises a plurality of layers of wire mesh arranged in superimposed relationship. Some of the layers consist of two sets of spaced parallel wires at an angle to one another and welded together at their crossing points. Other comprise woven wire mesh generally known as "chicken wire". The layers may be held together by folding as described in British Patent No. 2,113,739, or the woven wire layers may be trapped between two sets of crossing wires as described in British Patent No. 2,148,973.

Wire in a outer layer of the assembly is deformed away from the main body of the assembly by : crimping operation to form ridges 14 which are embedded in the strips 13 whereby the main body of the assembly is spaced from the back of the plate 10.

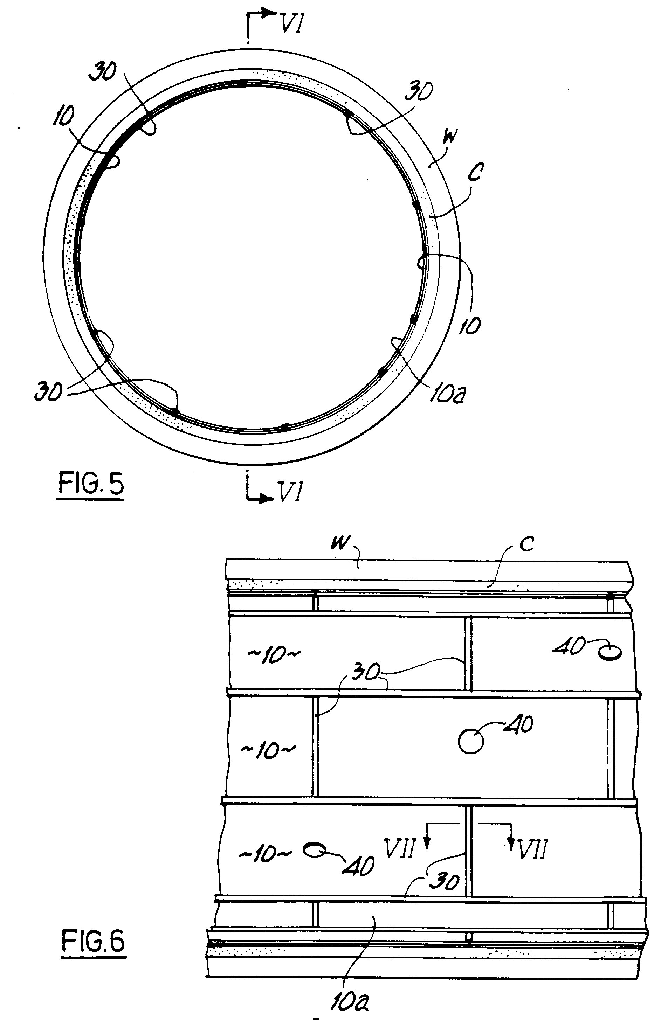

In use, for example, the members may be used, as shown in Figures 5 and 6, to line the interior wall W of a sewer. If structual reinforcement beyond that: provided by the members is required as when reparing a delapidated brick-built sewer, reinforcing bar members may be fixed to the wall as an initial step. If the intent is merely to provide a chemically resistant lining to a modern concrete sewer, then members having a minimum of reinforcing steel might be used. In either event the members are laid in the fashion of tiles to cover the surface of the wall W. An extruded sealing strip 30 (see Figure 7) is provided between the edges of adjacent plates. the strip 30 has a mushroom section protrusion 31 on its rear face.

The members may be manufactured or subsequently shaped by bending the steel assembly to have a shape corresponding with that of the wall to be covered.

If necessary the gap in the members !ining the internal periphery of the wall W is closed by plates 10a cut to size so that the members form a rigid self-supporting structure with their rearmost faces pressed against the wall W or any intermediate reinforcing bar which might have been installed.

The void between the rear face of the plates 10 and wall surface is filled with a cementitious material C pumped through pre-formed or drilled apertures in the plates 10, which apertures are subsequently closed by plugs 40. In effect a layer of ferro-cement is formed behind the plates. The cementitious material surrounds the protrusions 31 thus keying the strips 30 to the structure.

One advantage of lining a sewer in accordance with the invention is that the plates 10 act as shuttering for the cementitious filter, and no levelling by trowel of the finished surface is necessary. A further benefit arises from the self-supporting nature of the lining, avoiding the need to fix it, as by nailing, to the wall surface W, an operation in itself further damaging to a decaying wall. Yet again, since the lining formed by the plates 10 is sealed, large lengths may be laid whilst flow through the sewer is uninterrupted, minimising, if not eliminating, the need for overpumping.

It will be appreciated that it is not intended to limit the invention to the above example only, many variations, such as might readily occur to one skilled in the art, being possible, without departing from the scope thereof as defined by the appended claims.

## Claims

1. A constructional member formed from a bendable plate (10) of plastics material and an assembly (12) of steel wires extending outwardly from one face thereof, characterised in that the assembly (12) comprises a ferrocement reinforcement of crossed sets of spaced, parallel wires and woven wire mesh and in that a textile fabric (11) is bonded to one face of the plastics material plate (10) and in that the assembly (12) is secured to the fabric by an adhesive applied to the fabric at discrete locations.

2. A member according to claim 1, characterised in that the plate (10) is of thermoplastic material such as a high density polyethylene.

3. A member according to claim 1 or claim 2, characterised in that the textile fabric (11) is a stitch-bonded polyester.

4. A member according to claim 2 or claim 3, characterised in that the fabric (11) is thermally bonded to the plate (10).

5. A member according to any one of claims 1-4, characterised in that the adhesive is applied to the fabric (11) in spaced parallel strips (13).

6. A member according to any preceding claim, characterised in that the assembly (12) is deformed from the face thereof for engagement with the adhesive to space the main body of the assembly (12) away from the plate (10).

7. A member according to any preceding claim, characterised in that the assembly (12) is comprised by folded layers of welded parallel wires and woven wire mesh.

8. A member according to any one of claims 1-6, characterised in that the assembly (12) is comprised by wire mesh trapped between two sets of parallel wires.

9. A member according to claim 1, characterised by the assembly (12) being filled with a cement to form a ferrocement.

10. A member according to claim 14, characterised by being adapted to form a lining for a wall by being bent to conform to the wall with the assembly (12) against the wall and then filled with cement to form a ferrocement in situ.

11. A method of forming a lining within a tubular duct in which constructional members according to claim 1 are arranged with the wire reinforcement against the wall of the duct in the fashion of tiles with sealing means between their adjacent edges, some of the members being cut to size if necessary to close the lining such that it forms a self-supporting rigid structure and behind which a cementitious material is pumped to fill the void between the plates and the wall of the duct.

## Patentansprüche

1. Konstruktionselement aus einer biegbaren Platte (10) aus Kunststoffmaterial und einer Anordnung (12) aus Stahldrähten, die sich von einer ihrer Flächen nach außen erstrecken,
**dadurch gekennzeichnet**,
daß die Anordnung (12) eine Eisenzementverstärkung aus gekreuzten Sätzen von mit Abstand angeordneten parallelen Drähten und Drahtgewebe umfaßt und daß ein Textilgewebe (11) mit einer Fläche der Platte (10) aus Kunststoffmaterial verbunden ist und daß die Anordnung (12) an dem Textilgewebe durch ein an bestimmten Stellen des Textilgewebes aufgebrachten Klebemittel befestigt ist.

2. Element nach Anspruch 1, dadurch gekennzeichnet, daß die Platte (10) aus thermoplastischem Material, wie hochdichtem Polyethylen besteht.

3. Element nach Anspruch 1 oder 2, dadurch gekennzeichnet, daß das Textilgewebe (11) ein steppkontaktiertes Polyester ist.

4. Element nach Anspruch 2 oder 3, daß das Gewebe (11) thermisch mit der Platte (10) verbunden ist.

5. Element nach einem der Ansprüche 1 bis 4, dadurch gekennzeichnet, daß das Klebemittel in parallelen, mit Abstand zueinander angeordneten Streifen (13) auf das Gewebe (11) aufgebracht ist.

6. Element nach einem der vorhergehenden Ansprüche, dadurch gekennzeichnet, daß die Anordnung (12) aus ihrer Fläche heraus für einen Eingriff mit dem Klebemittel deformiert ist, um den Hauptkörper der Anordnung (12) mit Abstand zu der Platte (10) anzuordnen.

7. Element nach einem der vorhergehenden Ansprüche, dadurch gekennzeichnet, daß die Anordnung (12) aus gefalteten Schichten aus geschweißten parallelen Drähten und Drahtgewebe besteht.

8. Element nach einem der Ansprüche 1 bis 6, dadurch gekennzeichnet, daß die Anordnung (12) aus einem zwischen zwei Sätzen aus parallelen Drähten eingeschlossenen Drahtgewebe besteht.

9. Element nach Anspruch 1, dadurch gekennzeichnet, daß die Anordnung (12) mit einem Zement zur Bildung von Eisenzement ausgefüllt ist.

10. Element nach Anspruch 14, dadurch gekennzeichnet, daß es zur Bildung einer Auskleidung für eine Wand geeignet ist, indem es zur Anpassung an die Wand gebogen wird, wobei die Anordnung (12) an der Wand liegt, und dann mit Zement zur Bildung eines Eisenzements in situ gefüllt wird.

11. Verfahren zur Bildung einer Auskleidung in einer rohrförmigen Leitung, bei dem Konstruktionselemente nach Anspruch 1 mit der Drahtverstärkung gegen die Wand der Leitung in der Art von Kacheln mit Dichtungsmitteln zwischen ihren benachbarten Kanten angeordnet werden, wobei einige der Elemente, wenn nötig, auf Maß geschnitten werden, um die Auskleidung zu schließen, derart, daß sie einen selbsttragenden steifen Aufbau bildet, hinter den ein Zementmaterial gepumpt wird, um die Lücke zwischen Platten und der Wand der Leitung zu füllen.

## Revendications

1. Elément de construction formé d'une plaque souple (10) en matière plastique et d'un ensemble (12) de fils d'acier qui fait saillie extérieurement sur une première face de cette plaque, caractérisé en ce que l'ensemble (12) constitue une armature de ciment armé formée de jeux croisés de fils métalliques parallèles espacés et d'une toile ou grillage métallique tissé, en ce qu'un tissu textile (11) est fixé à une face de la plaque (10) de matière plastique et en ce que l'ensemble (12) est fixé au tissu par un adhésif appliqué au tissu en des emplacements discrets.

2. Elément selon la revendication 1, caractérisé en ce que la plaque (10) est faite d'une matière thermoplastique telle qu'un polyéthylène à haute densité.

3. Elément selon la revendication 1 ou la revendication 2, caractérisé en ce que le tissu textile (11) est un polyester lié par piqûres.

4. Elément selon la revendication 2 ou la revendication 3, caractérisé en ce que le tissu (11) est fixé à la plaque (10) par voie thermique.

5. Elément selon une quelconque des revendications 1 à 4, caractérisé en ce que l'adhésif est appliqué au tissu (11) en bandes parallèles espacées (13).

6. Elément selon une quelconque des revendications précédentes, caractérisé en ce que l'ensemble (12) est déformé dans le sens qui l'éloigne de la face gui est en contact avec l'adhésif pour espacer le corps principal de l'ensemble (12) à distance de la plaque (10).

7. Elément selon une quelconque des revendications précédentes, caractérisé en ce que l'ensemble (12) est composé de couches de fils métalliques parallèles soudés et de toile ou grillage métallique tissé repliées sur elles-mêmes.

8. Elément selon une quelconque des revendications 1 à 6, caractérisé en ce que l'ensemble (12) est composé d'une toile ou d'un grillage métallique emprisonné entre deux jeux de fils métalliques parallèles.

9. Elément selon la revendication 1, caractérisé en ce que l'ensemble (12) est comblé de ciment pour former un ciment armé.

10. Elément selon la revendication 14, caractérisé en ce qu'il est adapté pour former un revêtement d'une paroi par une courbure qui le conforme à la paroi, l'ensemble (12) étant appliqué contre la paroi, puis comblé de ciment pour former un ciment armé en place.

11. Procédé de formation d'un revêtement à l'intérieur d'un conduit tubulaire, dans lequel des éléments de construction selon la revendication 1 sont disposés avec leur armature de fil métallique contre la paroi du conduit, à la façon de carreaux, et munis de moyens d'étanchéité entre leurs bords adjacents, certains des éléments étant découpés si nécessaire à bonne distance pour fermer le revêtement de manière qu'il forme une structure rigide autoporteuse, derrière laquelle une matière du type ciment est injectée pour combler le vide entre les plaques et la paroi du conduit.
